# EUROPÄISCHE PATENTSCHRIFT

(11) **EP 1 777 051 B1**
(45) Veröffentlichungstag und Bekanntmachung des Hinweises auf die Patenterteilung: **16.07.2008**
(21) Anmeldenummer: 06121729.5
(22) Anmeldetag: 04.10.2006
(51) Int. Cl.: B29C 44/12, B29C 44/32, C08G 18/48, C08G 18/50

(54) **Polyurethanschaumstoffe zur Rohrdämmung**
Polyurethane foams for insulating pipes
Mousse de polyuréthane pour des tuyaux calorifuges

(30) Priorität: 19.10.2005 DE 102005050413
(43) Veröffentlichungstag der Anmeldung: 25.04.2007
(73) Patentinhaber: BASF SE, 67056 Ludwigshafen (DE)
(72) Erfinder: Grieser-Schmitz, Christof, 49076, Osnabrück (DE); Ellersiek, Carsten, 49525, Lengerich (DE)

(56) Entgegenhaltungen:
- EP-A2- 0 865 893
- WO-A-20/04024411
- DE-A1- 19 817 507
- DE-A1- 19 924 771
- US-A- 4 522 578

## Beschreibung

Die Erfindung betrifft gedämmte Rohre, aufgebaut aus
i) Mediumrohr
ii) Polyurethanschaumstoff erhältlich durch Umsetzung einer Isocyanatkomponente (a) mit einer Polyolmischung (b) und
iii) Mantelrohr,
wobei die Polyolmischung (b) mindestens ein Polyetherpolyalkohol (b1i) enthält, dass erhältlich ist durch Alkoxylierung von Saccharose und Diethylenglykol und/oder Glycerin sowie gegebenenfalls Pentaerythrit mit Ethylenoxid und/oder Propylenoxid und das eine Funktionalität gegenüber Isocyanaten von größer 3, bevorzugt zwischen 3 und 4,5, eine Hydroxylzahl größer 300 mg KOH/g, bevorzugt zwischen 300 und 450 mg KOH/g, und eine Viskosität von kleiner 2500 mPas, bevorzugt zwischen 1500 und 2500 mPas, jeweils gemessen nach DIN 53019 bei 25°C, aufweist. Außerdem bezieht sich die Erfindung auf Verfahren zur Herstellung von gedämmten Rohren, umfassend die Schritte:
1) Bereitstellen von Mediumrohr und des Mantelrohrs, wobei das Mediumrohr innerhalb des Mantelrohrs angeordnet ist,
2) Herstellung eines Polyurethanschaumstoffes durch Umsetzung einer Isocyanatkomponente (a) mit einer Polyolmischung (b) zwischen Mediumrohr und Mantelrohr,
wobei die Polyolmischung (b) mindestens ein Polyetherpolyalkohol (b1i) enthält, dass erhältlich ist durch Alkoxylierung von Saccharose und Diethylenglykol sowie gegebenenfalls Pentaerythrit und/oder Glycerin mit Ethylenoxid und/oder Propylenoxid und das eine Funktionalität gegenüber Isocyanaten von größer 3, bevorzugt zwischen 3 und 4,5, eine Hydroxylzahl größer 300 mg KOH/g, bevorzugt zwischen 300 und 450 mg KOH/g, und eine Viskosität von kleiner 2500 mPas, bevorzugt zwischen 1500 und 2500 mPas, jeweils gemessen nach DIN 53019 bei 25°C, aufweist.

Mit Polyurethanschaumstoffen gedämmte Rohre sind im Stand der Technik bekannt und beispielsweise in EP-A-865 893 und DE-A-197 42 012 beschrieben.

Der überwiegende Anteil an vorgedämmten Rohren, die PUR-Schaum zur Dämmung nutzen wird mit Hilfe der diskontinuierlichen Rohr-in-Rohr Produktion hergestellt. Im Rahmen dieses Verfahrens wird das Mediumrohr (in der Regel Stahl) mit sternförmigen Abstandshaltern versehen, die der Zentrierung des inneren Rohres dienen. Das Mediumrohr wird in das äußere Hüllrohr geschoben (in der Regel Polyethylen), so dass sich ein Ringspalt zwischen beiden Rohren ergibt. Aufgrund seiner hervorragenden Dämmeigenschaften wird dieser Ringspalt mit Polyurethanschaum gefüllt. Hierfür wird das leicht geneigte Doppelrohr mit Abschlusskappen versehen, die mit Entlüftungslöchern ausgestattet sind. Anschließend wird in den Ringspalt mittels einer Polyurethandosiermaschine das flüssige Reaktionsgemisch eingefüllt welches in noch flüssiger Form im Rohrspalt hinunter fließt bis die Reaktion einsetzt. Ab diesem Zeitpunkt findet die weitere Verteilung durch Fließen des langsam in der Viskosität ansteigenden Schaums statt, bis das Material ausreagiert ist.

Neben der oben beschriebenen Methode gibt es noch weitere Möglichkeiten entsprechende Rohre herzustellen. Ein innovatives Verfahren hierfür stellt die "Lanzentechnik" dar. Hierbei wird der Mischkopf während der Produktion durch den Ringspalt bewegt. Hierfür kann entweder der Mischkopf selbst oder das Rohr bewegt werden. Währenddessen strömt das flüssige PUR-Reaktionsgemisch aus, steigt auf und kann dann das Rohr tragen. Deshalb können bei diesem Verfahren die oben erwähnten Abstandshalter entfallen. Mit dem Lanzenverfahren können Rohre mit einer niedrigeren Schaumdichte bzw. besseren Schaumdichtenverteilung hergestellt werden. Ein weiterer Vorteil ist die Möglichkeit, feinzelligere Schäume einzusetzen, die durch den Einsatz reaktiverer Polyolkomponenten erzielt werden können.

Beim Lanzenverfahren treten zwei Probleme einzeln oder kombiniert auf: Mangelnde Druckfestigkeiten (Bedingung > 0,3 N/mm² nach EN 253:2003) und/oder ungenügende Zentrierung des Stahlrohres (Tabelle 7, Koaxialitätstoleranz in Abhängigkeit vom Nennaußendurchmesser, EN 253:2003).

Aufgabe der Erfindung war es daher, ein Polyurethansystem bereitzustellen, welches vorteilhaft bei der Herstellung von gedämmten Rohren verwendet werden kann und dort zu einem Polyurethanschaumstoff mit sehr guter Druckfestigkeit (> 0,3 N/mm² nach EN 253) führt, mit dem eine hervorragende Zentrierung des Stahlrohres (Mediumrohrs) ermöglicht wird.

Die Aufgaben konnten durch die eingangs dargestellten gedämmten Rohre sowie das eingangs beschriebene Verfahren gelöst werden.

Durch den Einsatz dieser erfindungsgemäßen Polyole konnte erreicht werden, dass der während des Schäumprozesses aufsteigende Schaum durch die geringere Grundviskosität und den langsameren Anstieg der Reaktionsviskosität das Mediumrohr nur wenig aufschwimmen lässt.

Die bei der Umsetzung eingesetzte Polyolmischung kann üblicherweise (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe enthalten. Dabei weist die Polyolmischung bestehend aus (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe bevorzugt eine Viskosität von kleiner 3000 mPas, bevorzugt weniger als 2400 mPas, mehr bevorzugt weniger als 2200 mPas, gemessen nach DIN 53019 bei 20°C, auf. Dabei bezieht sich diese Viskositätsangabe auf Polyolmischungen (b), die wie dargestellt keine physikalischen Treibmittel enthalten. Als Untergrenze der Viskosität haben sich Werte von 200 mPas, bevorzugt 400 mPas, besonders bevorzugt 600 mPas, gemessen nach DIN 53019 bei 20°C, als sinnvoll erwiesen.

Es ist grundsätzlich auch möglich, der Polyolmischung physikalische Treibmittel hinzufügen. Die Zugabe von physikalischem Treibmittel führt jedoch zu einer signifikanten Absenkung der Viskosität. Daher beziehen sich die oben gemachten Angaben zur Viskosität der Polyolmischung (b), auch für den Fall, dass sie physikalische Treibmittel enthält, auf die Viskosität der Polyolmischung (b) ohne Zusatz von physikalischen Treibmitteln.

Die Ausgangsstoffe werden nachfolgend ausführlich dargestellt:

Als Isocyanatkomponente (a) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen. Die Isocyanatkomponente (a) kann auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (a), beispielsweise bei Temperaturen von etwa 80°C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Zur Herstellung von Polyurethan-Hartschaumstoffen wird insbesondere Roh-MDI eingesetzt.

In einer bevorzugten Ausführungsform wird die Isocyanatkomponente (a) so gewählt, dass sie eine Viskosität weniger als 600 mPas, bevorzugt von 100 bis 450, besonders bevorzugt von 120 bis 350, insbesondere von 180 bis 320 mPas, gemessen nach DIN 53019 bei 20°C, aufweist.

Als Polyole (Bestandteil b1) können zusätzlich den erfindungsgemäßen Polyolen allgemein für diesen Zweck bekannte Polyole zum Einsatz kommen. In Betracht kommen z.B. Verbindungen mit mindestens zwei gegenüber Isocyanat reaktiven Gruppen, das heißt mit mindestens zwei mit Isocyanatgruppen reaktiven Wasserstoffatomen. Beispiele hierfür sind Verbindungen mit OH-Gruppen, SH-Gruppen, NH-Gruppen und/oder NH₂-Gruppen.

Als Polyole (Bestandteil b1) kommen bevorzugt Verbindungen auf Basis von Polyesterolen oder Polyetherolen zum Einsatz. Die Funktionalität der Polyetherole und/oder Polyesterole beträgt im allgemeinen 1,9 bis 8, bevorzugt 2,4 bis 7, besonders bevorzugt 2,9 bis 6.

Die Polyole (b1) weisen bevorzugt eine Hydroxylzahl von größer als 70 mg KOH/g, bevorzugt größer als 100 mg KOH/g, besonders bevorzugt größer als 120 mg KOH/g auf. Als Obergrenze der Hydroxylzahl hat sich im allgemeinen 1000 mg KOH/g, bevorzugt 900 mg KOH/g, besonders 800 mg KOH/g bewährt.

Bevorzugt enthält Komponente (b1) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohohle in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin (TDA), Naphtylamin, Ethylendiamin, Diethylentriamin, 4,4'-Methylendianilin, 1,3,-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül Diethylenglykol,, Glycerin und Pentaerythrit verwendet.

Die Polyolmischung kann optional als Bestandteil (b2) Katalysatoren enthalten. Als Katalysatoren (b2) werden üblicherweise Verbindungen verwendet, welche die PUR- und/oder PIR-Reaktion beschleunigen.

In Betracht kommen bevorzugt organische Zinnverbindungen, wie Zinn-(II)-salze von organischen Carbonsäuren, und/oder basischen Aminverbindungen, bevorzugt tertiäre Amine, wie beispielsweise Triethylamin, und/oder 1,4-Diaza-bicyclo-(2,2,2)-octan. Die Katalysatoren werden im allgemeinen in einer Menge von 0,001 bis 5 Gew.-%, insbesondere von 0,05 bis 3,5 Gew.-% Katalysator, bezogen auf das Gewicht der Komponente (b), eingesetzt.

Bevorzugt wird man vor der Umsetzung der Isocyanatkomponente (a) mit der Polyolmischung (b) Glycin, N-((2-Hydroxy-5-nonylphenyl)methyl)-N-methyl-mononatrium Salz (CAS-Nummer 56968-08-2) in die Polyolmischung (b) mischen, besonders bevorzugt zwischen 0,01 und 3,5 Gew.-% Glycin, N-((2-Hydroxy-5-nonylphenyl)methyl)-N-methyl-mononatrium Salz (CAS-Nummer 56968-08-2) in die Polyolmischung (b) mischen, wobei sich die Gewichtsangaben auf das Gesamtgewicht der Polyolmischung (b) enthaltend Glycin, N-((2-Hydroxy-5-nonylphenyl)methyl)-N-methyl-mononatrium Salz (CAS-Nummer 56968-08-2) bezieht.

In dieser Schrift gilt im Zweifel die CAS-Nummer als eindeutige chemische Bezeichnung.

Bevorzugt wird zusätzlich zu Glycin, N-((2-Hydroxy-5-nonylphenyl)methyl)-N-methyl-mononatrium Salz (CAS-Nummer 56968-08-2) als Katalysator (b2) auch (2-Hydroxypropyl)trimethylammonium-2-ethylhexanoat (CAS-Nummer 62314-22-1), 1-Propan-ammonium-2-hydroxy-N,N,N-trimethyl-formiat, Trimethylhydroxypropylammoniumformiat , 2-((2-Dimethylamino)ethyl)methylamino)ethanol (CAS-Nummer 2212-32-0) und/oder N,N',N"-Tris(dimethylamino-propyl)hexahydrotriazin (CAS-Nummer 15875-13-5) eingesetzt.

Besonders bevorzugt wird man vor der Umsetzung der Isocyanatkomponente (a) mit der Polyolmischung (b) zwischen 0,01 und 3,5 Gew.-% N,N',N"-Tris(dimethylaminopropyl)hexahydrotriazin (CAS-Nummer 15875-13-5) in die Polyolmischung (b) mischen, wobei sich die Gewichtsangaben auf das Gesamtgewicht der Polyolmischung (b) enthaltend N,N',N"-Tris(dimethylamino-propyl)hexahydrotriazin bezieht.

Besonders bevorzugt ist ferner, dass man zusätzlich zu Glycin, N-((2-Hydroxy-5-nonylphenyl)methyl)-N-methyl-mononatrium Salz (CAS-Nummer 56968-08-2) als Katalysator (b2) auch Dimethylcyclohexylamin (CAS-Nummer 98-94-2) einsetzt.

Besonders bevorzugt wird man vor der Umsetzung der Isocyanatkomponente (a) mit der Polyolmischung (b) zwischen 0,01 und 3,5 Gew.-% Dimethylcyclohexylamin in die Polyolmischung (b) mischen, wobei sich die Gewichtsangaben auf das Gesamtgewicht der Polyolmischung (b) enthaltend Dimethylcyclohexylamin bezieht.

Besonders wird man zusätzlich zu Glycin, N-((2-Hydroxy-5-nonylphenyl)methyl)-N-methyl-mononatrium Salz (CAS-Nummer 56968-08-2) als Katalysator (b2) auch Methylbis(2-dimethylaminoethyl)amin (CAS-Nummer 3030-47-5) und/oder N,N,N',N'-tetramethyl-2,2'oxybis(ethylamin) (CAS-Nummer 3033-62-3) einsetzen. Besonders bevorzugt wird man vor der Umsetzung der Isocyanatkomponente (a) mit der Polyolmischung (b) zwischen 0,01 und 3,5 Gew.-% Methylbis(2-dimethylaminoethyl)amin (CAS-Nummer 3030-47-5) und/oder N,N,N',N'-tetramethyl-2,2'oxybis(ethylamin) (CAS-Nummer 3033-62-3) in die Polyolmischung (b) mischen, wobei sich die Gewichtsangaben auf das Gesamtgewicht der Polyolmischung (b) enthaltend Methylbis(2-dimethylaminoethyl)amin (CAS-Nummer 3030-47-5) und/oder N,N,N',N'-tetramethyl-2,2'oxybis-(ethylamin) (CAS-Nummer 3033-62-3) bezieht.

Die Polyolmischung kann ferner optional als Bestandteil (b3) chemische Treibmittel enthalten. Als chemische Treibmittel sind Wasser oder Carbonsäuren, insbesondere Ameisensäure als chemisches Treibmittel bevorzugt. Das chemische Treibmittel wird im allgemeinen in einer Menge von 0,1 bis 5 Gew.-%, insbesondere von 0,5 bis 3,0 Gew.-%, bezogen auf das Gewicht der Komponente (b), eingesetzt.

Wie vorstehend erwähnt kann die Polyolmischung physikalisches Treibmittel enthalten. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponenten b) eingesetzt.

In einer bevorzugten Ausführungsform enthält die Polyolmischung (b) als Bestandteil (b4) Vernetzer. Unter Vernetzer werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin.

Die Vernetzer werden im allgemeinen in einer Menge von 1 bis 10 Gew.-%, bevorzugt von 2 bis 6 Gew.-%, bezogen auf das Gesamtgewicht der Polyolmischung (b) (jedoch ohne physikalische Treibmittel), eingesetzt.

In einer weiteren bevorzugten Ausführungsform enthält die Polyolmischung (b) als Bestandteil (b5) Kettenverlängerungsmittel, die der Erhöhung der Vernetzungsdichte dienen. Unter Kettenverlängerungsmittel werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerungsmittel werden im allgemeinen in einer Menge von 2 bis 20 Gew.-%, bevorzugt von 4 bis 15 Gew.-%, bezogen auf das Gesamtgewicht der Polyolmischung (b) (jedoch ohne physikalische Treibmittel), eingesetzt.

Die Komponenten (b4) und (b5) können in der Polyolmischung einzeln oder in Kombination eingesetzt werden.

Durch Umsetzung des erfindungsgemäßen Polyurethansystems sind die erfindungsgemäßen Polyurethanschaumstoffe erhältlich. Bei der Umsetzung werden die Polyisocyanate (a) und die Polyolmischung (b) im allgemeinen in solchen Mengen zur Umsetzung gebracht, dass die Isocyanat-Kennzahl des Schaums 90 bis 250, bevorzugt 100 bis 200 beträgt.

In einer bevorzugten Ausführungsform werden die Komponenten (a) und (b) des Polyurethansystems so gewählt werden, dass der resultierende Schaumstoff eine Druckfestigkeit (bei Rohdichte 60 kg/m³) von größer 0,25 N/mm², bevorzugt größer 0,28 N/mm², besonders bevorzugt größer 0,30 N/mm², gemessen nach DIN 53421, aufweist.

Dem erfindungsgemäßen Polyurethansystem können gegebenenfalls auch noch Zusatzstoffe (b6) einverleibt werden. Unter Zusatzstoffe (b6) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen. Anzumerken ist, dass die oben angegebenen bevorzugten Viskositätsbereiche der Komponente (b) sich auf eine Polyolmischung (b) inklusive gegebenenfalls zugesetzter Zusatzstoffe (b6) (aber exklusive gegebenenfalls zugesetztem physikalischem Treibmittel) beziehen.

Die erfindungsgemäßen Polyurethansysteme finden bevorzugt zur Herstellung von gedämmten Rohren, beispielsweise von Fernwärmerohren, Anwendung. Gegenstand der Erfindung ist somit die Verwendung des erfindungsgemäßen Polyurethansystems zur Herstellung von gedämmten Rohren.

In einer bevorzugten Ausführungsform wird das erfindungsgemäße Polyurethansystem zur Herstellung von gedämmten Verbundmantelrohre für erdverlegte Fernwärmenetze gemäß DIN EN 253 verwendet.

Weiterhin ist Gegenstand der Erfindung ein gedämmtes Rohr für erdverlegte Fernwärmenetze, aufgebaut aus
i) einem Mediumrohr
ii) einer Schicht aus Dämmmaterial, enthaltend den erfindungsgemäßen Polyurethanschaumstoff, und
iii) einem Mantelrohr.

Bei dem Mediumrohr (i) handelt es sich im allgemeinen um ein Stahlrohr mit einem Außendurchmesser von 1 bis 120 cm, bevorzugt 4 bis 110 cm und einer Länge von 1 bis 24 Meter, bevorzugt 6 bis 16 Meter.

Auf der Außenseite des Mediumrohres angeordnet ist eine Schicht aus Dämmmaterial (ii), enthaltend den erfindungsgemäßen Polyurethanschaumstoff. Diese Schicht weist im allgemeinen eine Dicke von 1 bis 20 cm, bevorzugt 2 bis 10 cm auf.

In einer bevorzugten Ausführungsform weist die Schicht aus Dämmmaterial eine Gesamtrohdichte von 55 bis 100 kg/m³, bevorzugt von 60 bis 75 kg/m³, besonders bevorzugt von 60 bis 67 kg/m³ auf. Unter Gesamtrohdichte ist hier die Rohdichteverteilung über den Rohrquerschnitt und die Rohrlänge gemeint.

Bevorzugt wird man die Umsetzung der Isocyanatkomponente mit der Polyolkomponente bei einer Verdichtung von größer 1,1 durchführen. Unter Verdichtung versteht man den Quotienten aus der Gesamtfülldichte des Rohrspaltes dividiert durch die freigeschäumte Kernrohdichte bestimmt an einem unverdichteten Schaumkörper.

Diese Verdichtung kann dadurch erreicht werden, dass man die Reaktionsprofil des Schaumes so einstellt, dass der frische Schaum den bereits eingefüllten Schaum verdichtet. Anders ausgedrückt verdichtet der Schaum von innen heraus. Diese Verdichtung bietet den Vorteil, dass höhere Druckfestigkeiten sowie ein verbesserte Zentrierung des Mediumrohres erreicht werden können.

In einer weiteren bevorzugten Ausführungsform weist die Schicht aus Dämmmaterial (ii), enthaltend den erfindungsgemäßen Polyurethanschaumstoff eine Wärmeleitfähigkeit von weniger als 27 mW/mK, bevorzugt von 20 bis 26,0, besonders bevorzugt 20 bis 24 gemessen nach EN ISO 8497 auf.

Das Mantelrohr (iii) umgibt die Schicht aus Dämmmaterial und besteht im allgemeinen aus Kunststoff, beispielsweise aus Polyethylen, und weist üblicherweise eine Dicke von 1 bis 30 mm auf. Der Innendurchmesser des Mantelrohrs beträgt im allgemeinen 6 bis 140 cm, bevorzugt 10 bis 120 cm.

Das Mantelrohr (iii) kann gegebenenfalls aus mehreren Schichten bestehen, die beim Extrusionsvorgang zusammengeführt werden. Ein Beispiel hierfür ist das Einbringen von mehrlagigen Folien zwischen PUR-Schaumstoff und PE-Mantel, wobei die Folie zur Verbesserung der Sperrwirkung mindestens eine metallische Lage enthält. Geeignete Mantelrohre dieses Typs sind in EP-A-960 723 beschrieben.

In einer besonders bevorzugten Ausführungsform handelt es sich bei dem gedämmten Rohr um ein gedämmtes Verbundmantelrohr für erdverlegte Fernwärmenetze, welches die Anforderungen von DIN EN 253 erfüllt.

Bevorzugt wird man die Isocyanatkomponente (a) und die Polyolmischung (b) mittels eines Mischkopfes, der axial zwischen Mantelrohr und Mediumrohr bewegt wird, eintragen. Dabei dient der Mischkopf während des Schäumvorganges bevorzugt als Abstandshalter zwischen Mediumrohr und Mantelrohr.

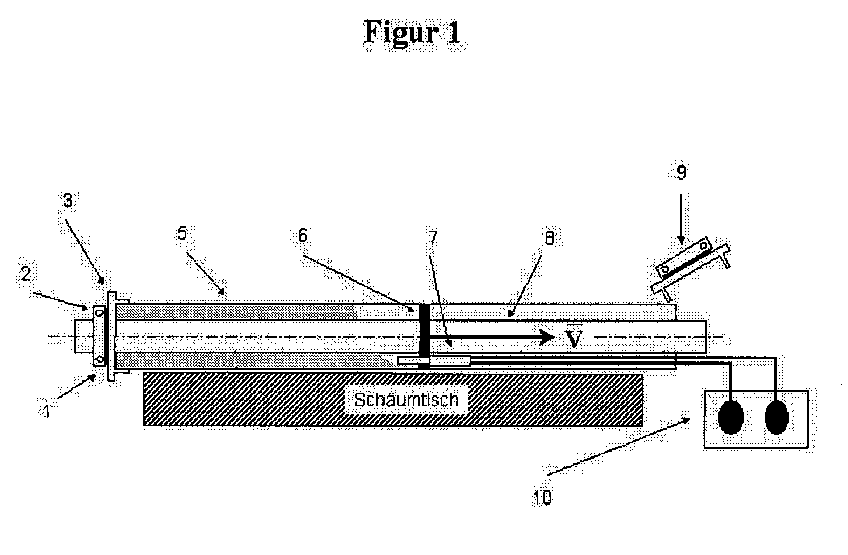

Bevorzugt erfolgt die Herstellung der erfindungsgemäßen Rohre mittels der Lanzentechnik, die beispielhaft in der Figur 1 dargestellt wird. In der Figur 1 haben die Zahlen die folgende Bedeutung:
1: Dichtring
2: Schelle
3: Endkappe
5: Mantelrohr
6: Führungsring
7: Mischkopf
8: Mediumrohr
9: Verschlussdeckel
10: PU-Schäumanlage

In einem Verfahren gemäß Figur 1 handelt es sich um ein diskontinuierliches Verfahren. Im Rahmen dieses Verfahrens wird zwischen dem Mediumrohr (in der Regel Stahl) und dem äußeren Mantelrohr (in der Regel Polyethylen) ein Führungsring mit dem Mischkopf geschoben, der axial beweglich ist und zudem als Abstandshalter zwischen Mediumrohr und Mantelrohr dient. Der Ringspalt zwischen Mediumrohr und Mantelrohr wird aufgrund seiner guten Dämmeigenschaften mit Polyurethanschaumstoff gefüllt. Das Befüllen in den Ringspalt erfolgt bevorzugt mittels einer Polyurethandosiermaschine, die das flüssige Reaktionsgemisch über den Mischkopf in noch flüssiger Form einträgt.

Der Einsatz des erfindungsgemäßen Polyurethansystems führt im erfindungsgemäßen Verfahren zur Herstellung gedämmter Rohre zu folgenden Vorteilen:

Es können Druckfestigkeiten erzielt werden, die oberhalb von 0,25 N/mm² liegen. Idealerweise werden Rohre hergestellt, die Druckfestigkeiten > 0,3 N/mm² besitzen und der EN 253 entsprechen.

Mit dem erfindungsgemäßen Polyurethanschaumstoff können gedämmte Rohre mit einer Zentrierung des Mediumrohres erzielt werden, die die Anforderungen nach Tabelle 7 - Koaxialitätstoleranz in Abhängigkeit vom Nennaußendurchmesser, EN 253:2003 erfüllen

### Beispiele:

Die in der Tabelle 1 dargestellten Rezepturen wurden verschäumt. Die Produkteigenschaften sind ebenfalls in der Tabelle 1 dargestellt.

**Tabelle 1:**

| Beispiel | 1 | 2 | 3 | 4 |
|---|---|---|---|---|
| Polyol A | 40 | - | 40 | - |
| Polyol B | 44,8 | 44,8 | 45,8 | 45,8 |
| Polyol C | 10 | 10 | 10 | 10 |
| Polyol D | - | 40 | - | 40 |
| Tegostab® B 8467 | 1,5 | 1,5 | 1,5 | 1,5 |
| Kat 1 | 0,8 | 0,8 | 0,8 | 0,8 |
| Kat 2 | 0,2 | 0,2 | 0,2 | 0,2 |
| Kat 3 | 0,7 | 0,7 | 0,7 | 0,7 |
| Kat 4 | 1,0 | 1,0 | - | - |
| Wasser | 1,0 | 1,0 | 1,0 | 1,0 |
| Summe | 100,0 | 100,0 | 100,0 | 100,0 |
| Pentan | 6,0 | 6,0 | 6,0 | 6,0 |
| Lupranat® M 20S | 132 | 132 | 132 | 132 |
| Isocyanat-Index | 130 | 130 | 130 | 130 |
| Viskosität [mPa*s] | 2800 | 4200 | 2800 | 4200 |
| Zentrierung-Abweichung (D=125 mm)** | 2 mm | 3 mm | 2 mm | 10 mm |
| Druckfestigkeit*** | 0,42 N/mm² | 0,40 N/mm² | 0,34 N/mm² | 0,25 N/mm² |
| Verdichtungsfaktor | 1,2 | 1,15 | 1,1 | 1,05 |
| | OH-Zahl | Funktionalität | Viskosität [25°C] | MG [g/mol] |
| Polyol A | 403 mg KOH/g | 3,9 | 2200 | 550 |
| Polyol B | 405 mg KOH/g | 3,8 | 17000 | 530 |
| Polyol C | 400 mg KOH/g | 3 | 370 | 420 |
| Polyol D | 490 mg KOH/g | 4,3 | 8300 | 500 |

| | | | | |
|---|---|---|---|---|
| ** EN 253 Prüfkriterium ist Außendurchmesserabhängig, erfüllt bei s = 3 mm (D=75 - 160 mm) *** EN 253 erfüllt, bei Druckfestigkeiten >= 0,3 N/mm² - Polyol A:: gestartet mit Saccharose, Pentaerythrit und Diethylenglykol - Polyol B:: gestartet mit TDA, alkoxyliert mit EO und PO - Polyol C:: gestartet mit Glycerin, alkoxyliert mit PO - Polyol D:: gestartet mit Sorbitol, alkoxyliert mit PO - Kat 1:: Dimethylcyclohexylamin (CAS-Nummer 98-94-2) - Kat 2:: Lupragen® N 600 (BASF Aktiengesellschaft), N,N',N"-Tris(dimethylaminopropyl)hexahydrotriazin (CAS-Nummer 15875-13-5) - Kat 3:: Lupragen® N 301 (BASF Aktiengesellschaft) Methylbis(2-dimethylaminoethyl)amin (CAS-Nummer 3030-47-5) - Kat 4:: Dabco® Curithane® 52, enthält Glycin, N-((2-Hydroxy-5-nonylphenyl)methyl)-N-methyl-mononatrium Salz (CAS-Nummer 56968-08-2) Lupranat® M20S (BASF Aktiengesellschaft): MDI | | | | |

Vergleicht man die Druckfestigkeiten der vier verschiedenen Rezepturen, so erkennt man, dass sich das erfindungsgemäße Polyol A (Beispiele 1 und 3) deutlich positiv auswirkt. Gegenüber der Standardrezeptur konnte der Grenzwert der EN 253 von 0,3 N/mm² übersprungen werden. Die Zentrierung des Mediumrohres kann ebenfalls deutlich durch das Polyol verbessert werden und liegt bei der geprüften Rohrdimension von 60,3/125mm unterhalb der Grenze von 3mm. Die Zugabe des bevorzugten Katalysators (Curithane 52, Beispiele 1 und 2) führt zu einer deutlichen Verbesserung der Druckfestigkeit gegenüber der Standardrezeptur und einer Zentrierung, die verbessert ist, aber die EN 253 nur knapp erreicht. Beide Merkmale zusammen führen zu verbessernden Eigenschaften des gedämmten Rohres und somit zu deutlichen Vorteilen und einem sicheren Überschreiten der Grenzwerte der EN 235:2003.

## Patentansprüche

1. Gedämmtes Rohr, aufgebaut aus
i) Mediumrohr
ii) Polyurethanschaumstoff erhältlich durch Umsetzung einer Isocyanatkomponente (a) mit einer Polyolmischung (b) und
iii) Mantelrohr,
**dadurch gekennzeichnet, dass** die Polyolmischung (b) mindestens ein Polyetherpolyalkohol (b1i) enthält, das erhältlich ist durch Alkoxylierung von Saccharose und Diethylenglykol sowie gegebenenfalls Pentaerythrit und/oder Glycerin mit Ethylenoxid und/oder Propylenoxid und das eine Funktionalität gegenüber Isocyanaten von größer 3, eine Hydroxylzahl größer 300 mg KOH/g und eine Viskosität von kleiner 2500 mPas, gemessen nach DIN 53019 bei 25°C, aufweist.

2. Verfahren zur Herstellung von gedämmten Rohren, umfassend die Schritte:
1) Bereitstellen von Mediumrohr und des Mantelrohrs, wobei das Mediumrohr innerhalb des Mantelrohrs angeordnet ist,
2) Herstellung eines Polyurethanschaumstoffes durch Umsetzung einer Isocyanatkomponente (a) mit einer Polyolmischung (b) zwischen Mediumrohr und Mantelrohr,
**dadurch gekennzeichnet, dass** die Polyolmischung (b) mindestens ein Polyetherpolyalkohol (b1i) enthält, das erhältlich ist durch Alkoxylierung von Saccharose und Diethylenglykol sowie gegebenenfalls Pentaerythrit und/oder Glycerin mit Ethylenoxid und/oder Propylenoxid und das eine Funktionalität gegenüber Isocyanaten von größer 3, eine Hydroxylzahl größer 300 mg KOH/g und eine Viskosität von kleiner 2500 mPas, gemessen nach DIN 53019 bei 25°C, aufweist.

3. Verfahren gemäß Anspruch 2, **dadurch gekennzeichnet, dass** die Polyolmischung (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe enthält.

4. Verfahren gemäß Anspruch 2, **dadurch gekennzeichnet, dass** die Polyolmischung bestehend aus (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe eine Viskosität von kleiner 3000 mPas, gemessen nach DIN 53019 bei 20°C, aufweist.

5. Verfahren gemäß Anspruch 2, **dadurch gekennzeichnet, dass** man die Umsetzung bei einer Verdichtung von größer 1,1 durchführt.

6. Verfahren gemäß Anspruch 2, **dadurch gekennzeichnet, dass** man die Umsetzung bei einer Kennzahl zwischen 100 und 200 durchführt.

7. Verfahren gemäß Anspruch 2, **dadurch gekennzeichnet, dass** man die Isocyanatkomponente (a) und die Polyolmischung (b) mittels eines Mischkopfes, der axial zwischen Mantelrohr und Mediumrohr bewegt wird, einträgt.

8. Verfahren gemäß Anspruch 7, **dadurch gekennzeichnet, dass** der Mischkopf während des Schäumvorganges als Abstandshalter zwischen Mediumrohr und Mantelrohr dient.

## Claims

1. An insulated pipe comprising
i) pipe for a medium,
ii) polyurethane foam obtainable by reaction of an isocyanate component (a) with a polyol mixture (b) and
iii) outer pipe,
wherein the polyol mixture (b) comprises at least one polyether polyalcohol (b1i) which is obtainable by alkoxylation of sucrose and diethylene glycol and, if appropriate, pentaerythritol and/or glycerol with ethylene oxide and/or propylene oxide and has a functionality toward isocyanates of greater than 3, a hydroxyl number of greater than 300 mg KOH/g and a viscosity of less than 2500 mPas, measured in accordance with DIN 53019 at 25°C.

2. A process for producing insulated pipes, which comprises the steps:
1) provision of the pipe for a medium and the outer pipe, with the pipe for a medium being located within the outer pipe,
2) production of a polyurethane foam by reaction of an isocyanate component (a) with a polyol mixture (b) between the pipe for a medium and the outer pipe,
wherein the polyol mixture (b) comprises at least one polyether polyalcohol (b1i) which is obtainable by alkoxylation of sucrose and diethylene glycol and, if appropriate, pentaerythritol and/or glycerol with ethylene oxide and/or propylene oxide and has a functionality toward isocyanates of greater than 3, a hydroxyl number of greater than 300 mg KOH/g and a viscosity of less than 2500 mPas, measured in accordance with DIN 53019 at 25°C.

3. The process according to claim 2, wherein the polyol mixture comprises (b1) polyols, (b2) catalysts and, if appropriate, (b3) chemical blowing agents, (b4) crosslinkers, (b5) chain extenders and/or (b6) additives.

4. The process according to claim 2, wherein the polyol mixture comprising (b1) polyols, (b2) catalysts and, if appropriate, (b3) chemical blowing agents, (b4) crosslinkers, (b5) chain extenders and/or (b6) additives has a viscosity of less than 3000 mPas, measured in accordance with DIN 53019 at 20°C.

5. The process according to claim 2, wherein the reaction is carried out at a compaction of greater than 1.1.

6. The process according to claim 2, wherein the reaction is carried out at an index of from 100 to 200.

7. The process according to claim 2, wherein the isocyanate component (a) and the polyol mixture (b) are introduced by means of a mixing head which is moved axially between the outer pipe and the pipe for a medium.

8. The process according to claim 7, wherein the mixing head serves as spacer between the pipe for a medium and the outer pipe during the foaming procedure.

## Revendications

1. Tuyau isolé, constitué de :
i) un tuyau central,
ii) de la mousse de polyuréthanne obtenue par réaction d'un composant isocyanate (a) avec un mélange de polyol (b), et
iii) un tuyau-gaine,
**caractérisé en ce que** le mélange de polyol (b) contient au moins un polyétherpolyalcool (b1i) qu'on peut obtenir par alcoxylation de saccharose et de diéthylèneglycol ainsi qu'éventuellement pentaérythrite et/ou glycérine avec de l'oxyde d'éthylène et/ou de l'oxyde de propylène et qui présente une fonctionnalité par rapport aux isocyanates supérieure à 3, un indice hydroxyle supérieur à 300 mg de KOH/g et une viscosité inférieure à 2500 mPas, mesurée selon la norme DIN 53019 à 25 °C.

2. Procédé de fabrication de tuyaux isolés, comprenant les étapes suivantes :
1) procurer un tuyau central et le tuyau-gaine, le tuyau central étant disposé à l'intérieur du tuyau-gaine,
2) fabrication d'une mousse de polyuréthanne par réaction d'un composant isocyanate (a) avec un mélange de polyol (b), entre le tuyau central et le tuyau-gaine,
**caractérisé en ce que** le mélange de polyol (b) contient au moins un polyétherpolyalcool (b1i) qu'on peut obtenir par alcoxylation de saccharose et de diéthylèneglycol ainsi qu'éventuellement pentaérythrite et/ou glycérine avec de l'oxyde d'éthylène et/ou de l'oxyde de propylène et qui présente une fonctionnalité par rapport aux isocyanates supérieure à 3, un indice hydroxyle supérieur à 300 mg de KOH/g et une viscosité inférieure à 2500 mPas, mesurée selon la norme DIN 53019 à 25 °C.

3. Procédé selon la revendication 2, **caractérisé en ce que** le mélange de polyol contient (b1) des polyols, (b2) des catalyseurs ainsi qu'éventuellement (b3) des agents moussants chimiques, (b4) des agents de réticulation, (b5) des agents élongateurs de chaîne et/ou (b6) des additifs.

4. Procédé selon la revendication 2, **caractérisé en ce que** le mélange de polyol constitué (b1) de polyols, (b2) de catalyseurs ainsi qu'éventuellement (b3) d'agents moussants chimiques, (b4) d'agents de réticulation, (b5) d'agents élongateurs de chaîne et/ou (b6) d'additifs, présente une viscosité inférieure à 3000 mPas, mesurée selon la norme DIN 53019 à 20 °C.

5. Procédé selon la revendication 2, **caractérisé en ce qu'**on opère la réaction à une compression supérieure à 1,1.

6. Procédé selon la revendication 2, **caractérisé en ce qu'**on opère la réaction à un indice entre 100 et 200.

7. Procédé selon la revendication 2, **caractérisé en ce qu'**on incorpore le composant isocyanate (a) et le mélange de polyol (b) au moyen d'une tête de mélange dont le mouvement axial se situe entre le tuyau-gaine et le tuyau central.

8. Procédé selon la revendication 7, **caractérisé en ce que** la tête de mélange pendant le processus de moussage sert d'écarteur entre le tuyau central et le tuyau-gaine.
